# FASCICULE DE BREVET EUROPEEN

(11) **EP 0 995 477 B1**
(45) Date de publication et mention de la délivrance du brevet: **03.07.2002**
(21) Numéro de dépôt: 99402558.3
(22) Date de dépôt: 18.10.1999
(51) Int. Cl.: B01D 53/02, F25J 3/04

(54) **Procédé de purification d'un flux gazeux en ses impuretes N2O**
Verfahren zur Reinigung eines Gasstromes der N2O als Verunreinigung enthält
Process for purifying a gas stream containing N2O as an impurity

(30) Priorité: 20.10.1998 FR 9813137
(43) Date de publication de la demande: 26.04.2000
(73) Titulaire: L'air Liquide, S.A. à Directoire et Conseil de Surveillance pour l'Etude et l'Exploitation des Procédés Georges Claude, 75321 Paris Cedex 07 (FR)
(72) Inventeur: Millet, Cyrille, 75014 Paris (FR); Moreau, Serge, 78140 Velizy Villacoublay (FR); Kraus, Georges, 75006 Paris (FR); Gabillard, Jean-Pierre, 78610 Auffargis (FR)
(74) Mandataire: Pittis, Olivier

(56) Documents cités:
- EP-A- 0 718 024
- EP-A- 0 862 938
- DE-A- 3 244 370
- DE-A- 3 322 473

## Description

La présente invention se rapporte à un procédé pour éliminer les impuretés protoxyde d'azote (N₂O), et éventuellement vapeur d'eau (H₂O), hydrocarbures (CnHm) et/ou dioxyde de carbone (CO₂), contenues dans un flux gazeux et, plus particulièrement, à la purification d'air avant distillation cryogénique.

Avant de pouvoir être utilisé dans un procédé industriel, certains gaz nécessitent d'être débarrassés, au préalable, des impuretés qu'ils contiennent.

Ainsi, l'air atmosphérique qui contient généralement environ 250 ppm à 500 ppm de dioxyde de carbone (CO₂) et une quantité variable de vapeur d'eau et/ou d'hydrocarbures, tel l'éthylène, doit être débarrassé des ses impuretés préalablement à toutes opérations de séparation cryogénique, notamment par distillation cryogénique.

En effet, en l'absence d'un tel prétraitement de l'air, les impuretés CO₂ et, éventuellement H₂O et/ou hydrocarbures, qui s'y trouvent se solidifieraient à basse température et l'on assisterait alors à un colmatage des échangeurs de chaleur et des colonnes de distillation qui conduirait, d'une part, à une dégradation possible des équipements et, d'autre part, à une séparation incorrecte des différents constituants de l'air, tel l'azote ou l'oxygène.

En outre, les hydrocarbures susceptibles d'être présents dans l'air atmosphérique peuvent s'accumuler dans l'oxygène liquide de la boîte froide et il existe alors un risque de détérioration de l'installation.

En effet, on sait que, dans les colonnes de distillation cryogénique, les impuretés ayant un point d'ébullition plus élevé que celui de l'oxygène et présentes dans l'air atmosphérique sont susceptibles de se concentrer dans le bain liquide de la cuve.

Pour des raisons évidentes de sécurité, on veut réduire au niveau le plus faible possible la concentration d'hydrocarbures dans l'oxygène liquide.

De là, les installations de distillation cryogénique sont généralement équipées d'une unité de prépurification d'air destinée à arrêter la plus grande partie des impuretés présentes dans l'air atmosphérique.

Pour ce faire, plusieurs techniques et procédés ont déjà été proposés.

Une première technique pour éliminer les impuretés CO₂ et H₂O contenues dans un flux gazeux, tel l'air, consiste à réfrigérer ces impuretés, c'est-à-dire à obtenir une solidification ou cristallisation desdites impuretés à basse température. Cependant, cette technique est peu utilisée car elle est très pénalisante du point de vue des coûts énergétiques et en équipement.

Une alternative à cette technique réside dans l'élimination du dioxyde de carbone, et éventuellement de la vapeur d'eau, contenu dans le flux gazeux à traiter par adsorption de ces impuretés sur un adsorbant adéquat, telle une zéolite ou une alumine activée.

En effet, les zéolites et les alumines sont parmi les adsorbants les plus couramment utilisés dans les procédés de séparation des gaz par adsorption.

Ainsi, le document US-A-3,885,927 décrit l'utilisation d'une zéolite X échangée à au moins 90% par des cations baryum, laquelle zéolite a une capacité d'adsorption du CO₂ supérieure de 40% environ à une zéolite X ne contenant que des cations sodium.

En outre, le document EP-A-284850 décrit un procédé de purification d'un flux gazeux par adsorption sur une zéolite de type faujasite dont le rapport Si/AI est de 1 à 2,5, laquelle faujasite est échangée à au moins 90% par des cations divalents, tels les cations strontium ou baryum.

Par ailleurs, le document US-A-4,775,396 décrit l'adsorption préférentielle du dioxyde de carbone contenu dans un gaz non acide, tels l'azote, l'hydrogène et le méthane, par un procédé PSA (Pressure Swing Adsorption) sur un lit d'adsorption fixe contenant une zéolite de type faujasite échangée à au moins 20% par des cations du groupe formé par le zinc, les terres rares et l'ammonium, et échangée à au plus 80% par des cations de métal alcalin ou alcalino-terreux.

Le document FR-A-2335258 décrit, quant à lui, un procédé d'épuration de mélanges de gaz comprenant de l'azote, de l'hydrogène, de l'argon et/ou de l'oxygène, et renfermant des impuretés monoxyde de carbone, dioxyde de carbone et eau, par adsorption desdites impuretés sur des zéolites de type A ou X à une température comprise entre -40 et +4°C. Ce document décrit des zéolites de type A échangées de 70 à 82% par des ions calcium et dont le rapport Si/AI est d'au plus 1, et des zéolites de type X échangées ou non échangées dont le rapport Si/AI est compris entre 1.15 et 1.5. Classiquement, les zéolites X dont le rapport Si/AI est inférieur à 1.15 sont appelées LSX (Low Silica X zéolite) ou zéolite pauvre en silice.

De même, le document EP-A-0718024 décrit l'élimination de CO₂ contenu dans un flux gazeux par adsorption dudit CO₂ sur une zéolite X dont le rapport Si/AI est au maximum d'environ 1.15, à une température comprise entre -50°C et 80°C environ. Ce document décrit, en outre, les résultats obtenus en utilisant des zéolites X ou LSX non échangées ou échangées avec des cations lithium et calcium ou terres rares.

En outre, le document SU-A-1357053 décrit l'utilisation d'une zéolite de type mordénite échangée par des cations baryum pour éliminer le protoxyde d'azote ; la régénération de l'adsorbant se faisant à plus de 180°C ;

Par ailleurs, le document DD-A-6225345 préconise de purifier l'atmosphère de conservation de denrées alimentaires au moyen d'un adsorbant constitué d'un mélange de charbon actif et d'une zéolite A échangée par des cations calcium.

Cependant, les procédés existants ne peuvent pas être considérés comme totalement satisfaisants.

En effet, certains adsorbants, telle une zéolite 13X standard, habituellement utilisés pour éliminer les impuretés CO₂ et vapeur d'eau contenues dans l'air, ne permettent d'arrêter que partiellement, voire pas du tout, certains autres composés, tels l'éthylène, le propane, le méthane, l'éthane et/ou le protoxyde d'azote susceptibles d'être présents dans l'air.

Ceci est d'ailleurs rapporté par le document Linde Reports on Science and Technology, 36/1983, Dr. J. Reyhing, "Removing hydrocarbons from the process of air separation plants using molecular-sieve adsorbers".

De manière analogue, le document MUST'96, Munich Meeting on Air Separation Technology, October 10-11, 1996, Dr. U. Wenning, "Nitrous oxide in air separation plants", souligne l'inefficacité de la zéolite de type 5A pour arrêter le protoxyde d'azote (N₂O) contenu dans l'air.

Ainsi, de façon générale, lorsque l'on considère les impuretés éthane, propane, protoxyde d'azote et éthylène pouvant être présents dans l'air à des teneurs variables, on peut dire que :
- l'éthylène est un hydrocarbure insaturé et soluble dans l'oxygène liquide à hauteur de 30 000 ppm avec un faible coefficient d'équilibre soluté-gaz. Son point de congélation est de -169°C, tandis que la température de l'oxygène liquide est de -181°C à 1,2.10⁵ Pa. Donc, lorsqu'on ne procède à aucun prétraitement de l'air ou que ce prétraitement est insuffisant, l'arrêt de l'éthylène peut être imparfait et on peut alors le retrouver sous forme solide dans l'installation cryogénique ;
- l'éthane et le propane peuvent se retrouver à l'état liquide à la température de l'oxygène liquide sous 1,2.10⁵ Pa ; et
- le protoxyde d'azote (N₂O) pose, quant à lui, un problème différent pour les unités de séparation d'air par voie cryogénique. En effet, ce composé se trouve de manière globale dans l'atmosphère à hauteur de 0,3 ppm et avec un accroissement de teneur annuelle de l'ordre de 0,3%. A la différences des hydrocarbures cités précédemment, le protoxyde d'azote est inerte dans l'oxygène liquide et ne présente pas de risque en tant que tel. Cependant, il est néanmoins susceptible de pénétrer en quasi-permanence dans les colonnes à distiller des unités de séparations cryogénique et il peut alors se former des dépôts solides, comme dans le cas du dioxyde de carbone, dans les échangeurs et les colonnes de distillation. Il est donc souhaitable d'éviter de tels dépôts qui peuvent dégrader les performances de l'équipement.

Or, il n'existe actuellement aucun procédé réellement efficace d'élimination des impuretés protoxyde d'azote (N₂O) contenues dans un flux gazeux, en particulier dans l'air, utilisable à l'échelle industrielle.

En effet, bien que le document EP-A-862938 préconise d'utiliser un adsorbant zéolitique non-échangé, en particulier de type 13X, pour éliminer les impuretés de type NOx, notamment le N₂O, il s'avère en réalité que la zéolite 13X n'est pas efficace, en particulier, dans l'arrêt du N₂O, ainsi que le montreront les tests comparatifs réalisés par les inventeurs de la présente invention et consignés ci-après.

Par ailleurs, une autre technique consiste à réaliser une purge ou une adsorption à froid de ces impuretés de manière à éviter d'atteindre un taux de saturation en ces impuretés dans l'unité de séparation cryogénique.

Toutefois, cette dernière technique est très pénalisante du point de vue des coûts, en particulier des coûts énergétiques et ne peut donc pas être considérée comme pleinement satisfaisante.

Le but de la présente invention est donc d'améliorer la fiabilité des installations industrielles et d'améliorer les procédés de purification existants en résolvant le problème de l'élimination en particulier des impuretés protoxyde d'azote (N₂O), et éventuellement de l'éthylène ou d'autres hydrocarbures, susceptibles d'être présentes dans un flux gazeux, en particulier dans un flux d'air devant subir une séparation subséquente par distillation cryogénique.

La présente invention concerne alors un procédé de séparation d'au moins le protoxyde d'azote (N₂O) contenu dans un flux gazeux, dans lequel on adsorbe au moins le protoxyde d'azote sur au moins un adsorbant comprenant au moins une zéolite faujasite ayant un rapport Si/AI de 1 à 1,50 environ et contenant moins de 25% de cations K⁺, entre 50 et 99% de cations Ca²⁺ et au moins 1 % de cations Na⁺.

Selon le cas le procédé de l'invention peut comprendre l'une ou plusieurs des caractéristiques suivantes:
- ledit au moins un adsorbant comprenant au moins une zéolite est de type X ou LSX ayant un rapport Si/AI de 1 à 1,25 environ, de préférence au moins une zéolite LSX ayant un rapport Si/AI de l'ordre de 1.
- ledit au moins un adsorbant comprenant un mélange d'au moins une zéolite A et d'au moins une zéolite de type X ou LSX.
- la zéolite X ou LSX contient moins de 12% de cations K⁺.
- ladite zéolite X ou LSX contient de 60 à 95% de cations Ca²⁺.
- il comprend, en outre, au moins une étape d'élimination d'au moins une impureté choisie dans le groupe formé par la vapeur d'eau, le dioxyde de carbone, le monoxyde de carbone, l'hydrogène et les hydrocarbures, notamment l'éthylène, le propane et/ou le méthane.
- l'élimination d'au moins une partie des impuretés vapeur d'eau et dioxyde de carbone est réalisée sur au moins un lit de particules d'alumine activée.
- il est choisi dans le groupe formé par les procédés TSA, de préférence un procédé TSA dans lequel on opère à une température d'environ -40°C à +80°C.
- on opère à une pression de désorption de 5.10⁵ à 10⁴ Pa, de préférence 1,4.10⁵ et 0,9.10⁵, préférentiellement à une pression de désorption égale à environ la pression atmosphérique.
- on opère à une pression d'adsorption de 10⁵ à 10⁷ Pa, de préférence 3.10⁵ et 6.10⁶ Pa.
- il comprend au moins une étape de régénération d'au moins un adsorbant, de préférence à une température de régénération de 50 à 250°C.
- le flux gazeux à purifier est de l'air, de préférence de l'air soumis subséquemment à une séparation par distillation cryogénique.

Dans le cadre de la présente invention, on appelle "air", de l'air ambiant atmosphérique extérieur ou capté à l'intérieur d'un bâtiment ou d'une enceinte chauffée ou non, lequel air ambiant peut éventuellement subir un prétraitement, telle une catalyse oxydative ou une dessiccation préalable au moins partielle, ou une modification de sa teneur en l'un ou plusieurs de ses constituants, tel notamment un ajout ou un retrait d'oxygène ou d'azote par exemple.
- la zéolite X ou LSX contient, en outre, des cations choisis parmi les cations alcalino-terreux, de préférence les cations magnésium, strontium et/ou baryum.
- l'adsorption est réalisée dans au moins un adsorbeur et, de préférence, dans au moins deux adsorbeurs fonctionnant en parallèle, c'est-à-dire que l'un est en phase de production pendant que l'autre est en phase de régénération.
- il comprend au moins une étape de régénération de l'adsorbant par balayage avec de l'azote résiduaire ou un autre gaz de régénération à une température comprise entre 0°C et 300°C, de préférence à une température comprise entre 50°C et 250°.

L'invention va maintenant être décrite plus en détail à l'aide d'exemples donnés à titre illustratif, mais non limitatif.

### Exemple 1: Synthèse d'une zéolite LSX (Si/Al = 1).

La synthèse d'une zéolite X de structure faujasite ayant un rapport Si/AI inférieur ou égal à 1.15, encore appelé zéolite LSX, est réalisé de manière classique, tel que décrit notamment dans le document GB-A-1580928.

La zéolite LSX obtenue contient de 10 à 40% de cations potassium, en général de 20 à 30%, et de 60 à 90% de cations sodium; toutefois, la présence éventuelle d'autres cations n'est pas à exclure.

Une zéolite LSX contenant à la fois des ions sodium et potassium est habituellement appelée NaKLSX.

Partant d'une zéolite NaKLSX ainsi synthétisée, pour incorporer au sein de celle-ci des cations d'un ou plusieurs autres métaux, en particulier le calcium, on procède à un échange d'ions, de manière à substituer au moins une partie des cations potassium et/ou sodium contenus dans la NaKLSX de départ par des cations calcium, jusqu'à obtention du taux d'échange souhaité.

En d'autres termes, partant d'une NaKLSX, on obtient une CaNaKLSX nommée aussi CaLSX, c'est-à-dire une NaKLSX contenant en plus des ions calcium, en y introduisant lesdits ions calcium par substitution de tout ou partie des cations K⁺ et/ou Na⁺.

En effet, comme nous le verrons ci-après, les cations de calcium contenus dans une zéolite LSX influent considérablement sur notamment la capacité d'adsorption de N₂O de la zéolite, lorsque celle-ci est mise en oeuvre dans un procédé de type PSA ou préférentiellement TSA destiné à éliminer notamment le N₂O contenu dans un flux gazeux, en particulier l'air.

### Exemple 2 : Adsorption de C₂H₄ ou CO₂ sur zéolite CaX.

De l'azote artificiellement pollué avec 400 ppm de CO₂ (courbe C10) ou, le cas échéant, avec 15 ppm d'éthylène (C₂H₄) est mis en contact avec des particules de zéolite 10X échangée à environ 96% par des cations calcium (ci-après zéolite CaX); les 4% de cations résiduels étant essentiellement des cations K⁺ et Na⁺.

L'adsorption du CO₂ ou de l'éthylène sur la zéolite CaX est réalisée à une pression de 6.10⁵ Pa, à une température de 20°C et à un débit de 8,8 Nm³/h ; la zéolite CaX étant insérée dans un adsorbeur de laboratoire de 60 mm de diamètre.

Les particules CaX de zéolite ont une granulométrie moyenne d'environ 2 mm et le lit de zéolite une épaisseur de 25 cm.

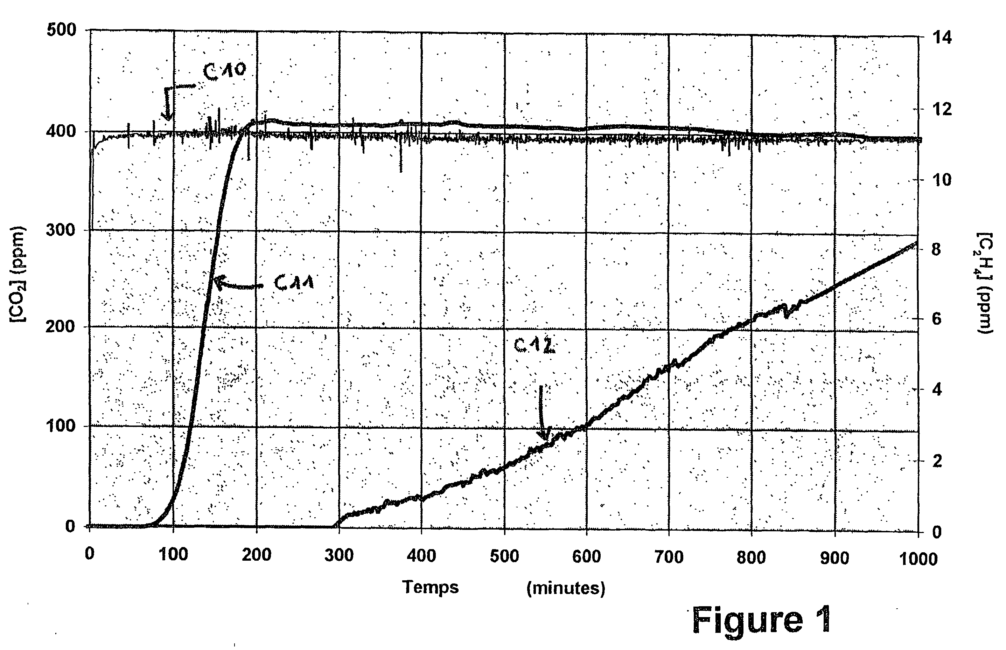

Les courbes de percée (temps de perçage) obtenues pour le CO₂ et l'éthylène sont représentées sur la figure 1, où l'on constate que la zéolite CaX conforme à la présente invention permet d'éliminer efficacement le dioxyde de carbone pendant environ 70 minutes (courbe C11) et l'éthylène pendant environ 300 minutes (courbe C12).

Dans le cadre de l'invention, on appelle temps de perçage la durée séparant le début de l'opération d'adsorption et l'apparition de CO₂ en aval du lit d'adsorbant à hauteur de 1 ppm.

### Exemple 3 : Essai comparatif d'adsorption C₂H₄ et CO₂ sur zéolite 13X non-échangée.

L'exemple 3 est analogue à l'exemple 2, mais vise cette fois à évaluer les performances d'adsorption du CO₂ ou de l'éthylène (C₂H₄) par des particules de zéolites 13X non-échangées conforme à l'art antérieur.

Les essais sur zéolite 13X sont réalisés dans les mêmes conditions que ceux effectués sur zéolite CaX (exemple 2); dans ce cas, l'azote est artificiellement pollué avec 450 ppm de CO₂ (courbe C20) ou 14 ppm de C₂H₄ (courbe C22) avant d'être mis en contact avec la zéolite 13X.

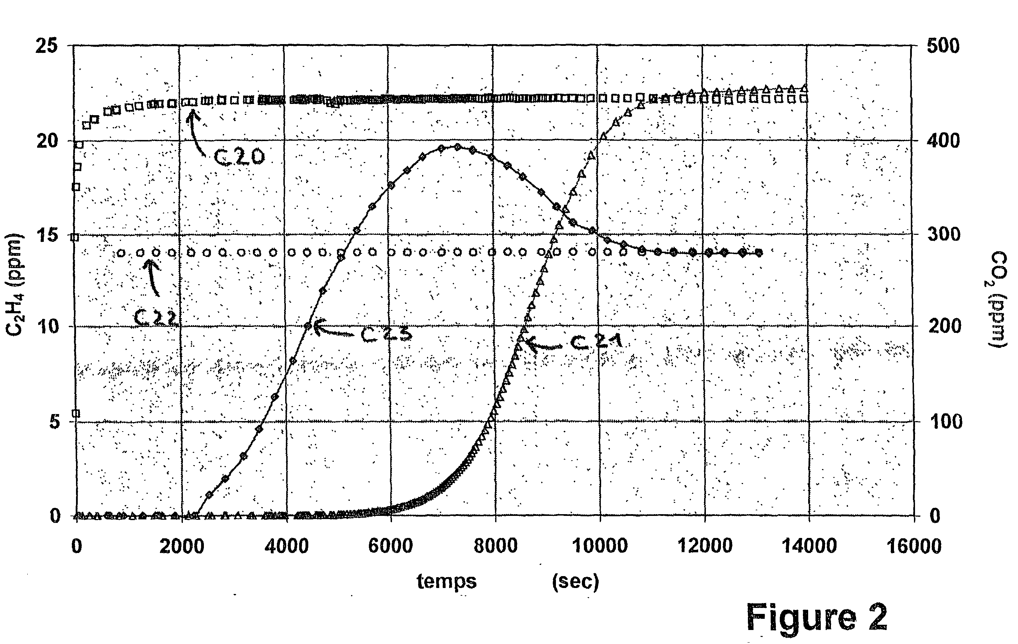

Les résultats obtenus sont représentés sur la figure 2, où l'on constate que, sur zéolite 13X non-échangée, la percée du CO₂ a lieu au bout d'environ 90 minutes (courbe C21), c'est-à-dire pour un temps un peu supérieur à celui de la CaX.

A titre indicatif, on a aussi figuré les courbes C20 et C22 qui représentent respectivement les teneurs en entrée, c'est-à-dire du flux gazeux avant purification, en impuretés CO₂ et C₂H₄.

Par contre, il apparaît que, sur zéolite 13X non-échangée, la percée en éthylène est de 30 minutes (courbe C23), alors que pour la zéolite CaX selon l'invention, la percée n'a lieu qu'après 300 minutes.

Ces résultats montrent clairement qu'une zéolite CaX selon l'invention présentent des performances d'adsorption de l'éthylène nettement améliorées par rapport à une zéolite 13X non-échangée selon l'art antérieur.

### Exemple 4 : Adsorption de N₂O et de CO₂ sur CaX (à 60% de Ca)

Cet exemple 4 est analogue à l'exemple 2, et vise à déterminer le temps de percée du protoxyde d'azote (N₂O) sur un adsorbant CaX conforme à l'invention.

Pour ce faire, comme dans l'exemple 2, de l'azote est artificiellement pollué par 0,9 ppm de protoxyde d'azote (N₂O), puis mis en contact avec un lit de particules de zéolite CaX échangées à 60% par des cations calcium (ci-après zéolite CaX).

Les particules de zéolite CaX sont des billes de 2 mm environ.

Les autres conditions expérimentales sont identiques à celles de l'exemple 2.

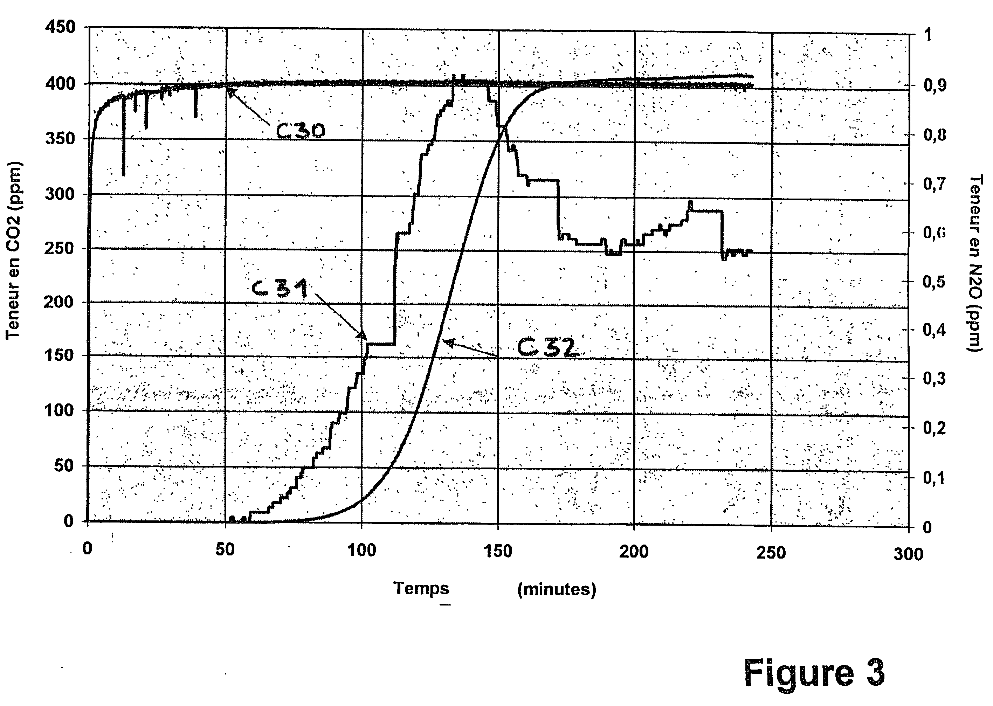

Les résultats obtenus sont représentés sur la figure 3, où l'on voit que la percée du N₂O n'a lieu qu'après environ 60 minutes (courbe C31), confirmant ainsi l'aptitude de la zéolite selon l'invention à adsorber efficacement le N₂O.

A titre indicatif, on a également représenté sur la figure 3, le début de la courbe de percée en CO₂ (courbe C32) sur CaX pour 400 ppm de CO₂ dans le flux de gaz entrant (courbe C30).

Ceci permet de constater que, sur CaX, la percée du CO₂ est quasi-simultanée à celle du N₂O.

### Exemple 5 : Régénération d'une zéolite CaX saturée en N₂O.

Une zéolite X échangée à 60% par des cations calcium est soumise à une saturation par 0,5 ppm de protoxyde d'azote (N₂O) à une pression de 6.10⁵ Pa.

Ensuite, la zéolite est régénérée par mise en contact avec un flux d'un gaz de régénération, par exemple de l'azote, à une température allant jusqu'à 260°C (courbe C40).

Le flux de gaz de régénération est récupéré à la sortie de l'adsorbeur et est analysé pour déterminer la variation de la quantité de N₂O désorbé (courbe C41) en fonction du temps écoulé et de la température du gaz de régénération.

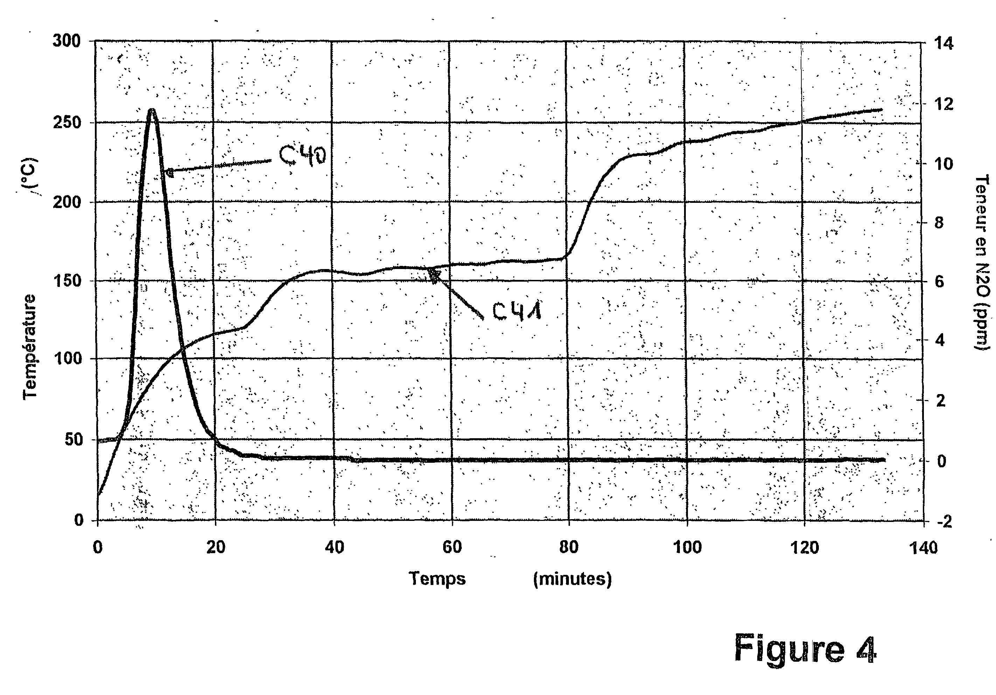

Les résultats ont été représentés sur la figure 4, où l'on voit que la totalité des impuretés N₂O qui sont adsorbées sur la zéolite CaX sont désorbées pour des températures de régénération inférieures à 100°C.

De là, il apparaît que, lors de la régénération de la zéolite, bien que la CaX présente une affinité plus forte pour le N₂O que la 13X, la désorption du N₂O adsorbé sur les particules de zéolite CaX peut être réalisée dans des conditions analogues à celles classiquement mises en oeuvre pour régénérer des particules de zéolites 13X, typiquement par balayage des particules avec un gaz chaud, c'est-à-dire à une température de l'ordre de 100°C.

En d'autres termes, selon la présente invention, la régénération des particules de zéolite CaX utilisées pour adsorber des impuretés N₂O contenues dans un flux gazeux peut être réalisée sans surcoût énergétique par rapport à un procédé classique utilisant une zéolite 13X, en particulier un procédé d'adsorption de type TSA.

### Exemple 6 : Adsorption de N₂O et de CO₂ sur CaX (à 86 % de Ca)

Cet exemple 6, qui est analogue à l'exemple 4, vise à déterminer le temps de percée du protoxyde d'azote (N₂O) sur une zéolite CaX conforme à l'invention, laquelle zéolite CaX est échangée à 86% par des cations calcium (taux d'échange de seulement 60% dans l'exemple 4).

De l'azote est artificiellement pollué par environ 0,9 ppm de protoxyde d'azote ou environ 425 ppm de CO₂ (courbe C50), est mis en contact avec les particules de zéolite CaX échangée à 86% par des cations calcium.

Les autres conditions expérimentales sont identiques à celles de l'exemple 4.

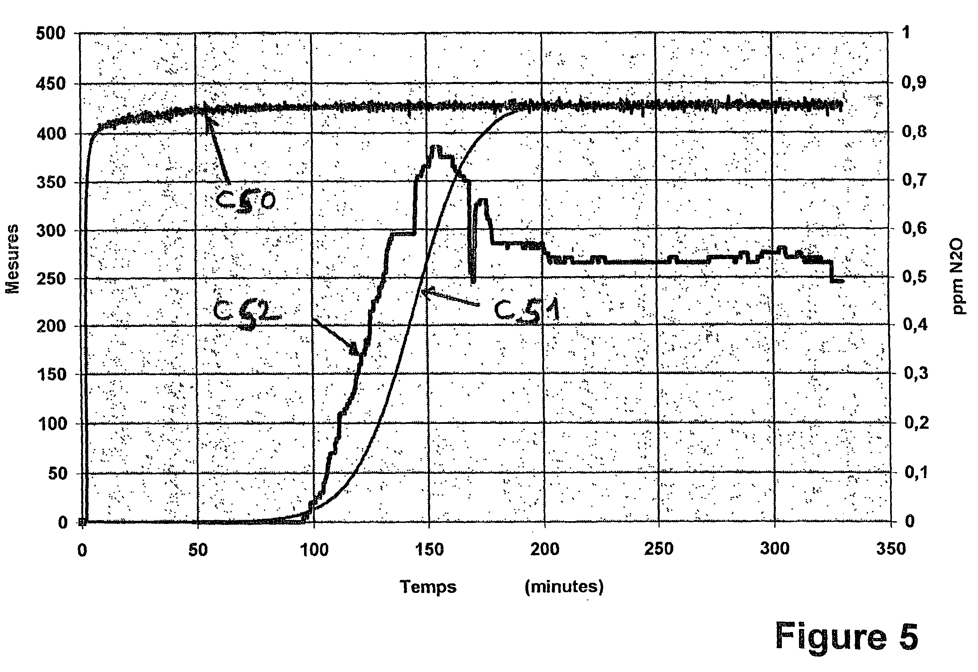

Les résultats obtenus sont représentés sur la figure 5, où l'on voit que la percée du N₂O (courbe C52) et également celle du CO₂ (courbe C51) n'ont lieu qu'après environ 60 minutes, confirmant ainsi les résultats de l'exemple 4, c'est-à-dire l'aptitude de la zéolite CaX selon l'invention à adsorber efficacement le N₂O et le CO₂.

### Exemple 7 : Adsorption N₂O et de CO₂ sur 13X classique.

Des essais analogues aux exemples 4 ou 6 ont été réalisés en utilisant une zéolite 13X classique non-échangée en tant qu'adsorbant.

Dans ce cas, le flux d'azote à purifier est artificiellement pollué par environ 5.5 ppm de N₂O et environ 374 ppm de CO₂, puis mis en contact avec des particules de zéolites 13X sous une pression de 6.10⁵ Pa et à une température de purification de l'ordre de 20.5 °C.

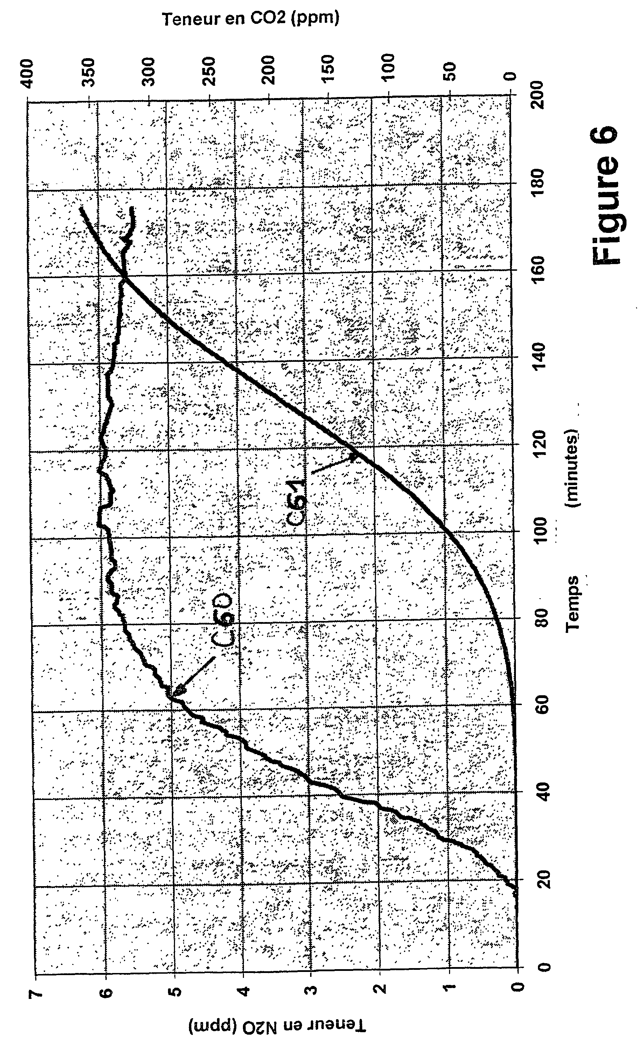

Les résultats obtenus (figure 6) montrent que la zéolite 13X non-échangée selon l'art antérieur ne permet pas d'arrêter aussi efficacement les impuretés N₂O qu'une zéolite CaX selon la présente invention.

En effet, comme on le voit sur la figure 6, on assiste à une percée des impuretés N₂O après seulement 15 à 20 minutes (courbe C60) et à une percée des impuretés CO₂ après environ 60 minutes (courbe C61), lorsqu'on utilise une zéolite de type 13X classique en tant qu'adsorbant dans un procédé TSA.

### Exemple 8 : Epuration d'air sur CaX (Si/Al = 1.25).

De l'air atmosphérique contenant 0,4 ppm de N₂O, 1 ppm de C₂H₄ et 400 ppm de CO₂ est mis en contact avec des particules de zéolite X (Si/Al= 1,25) échangée à 60 % par des ions Ca²⁺ et contenant, en outre, environ 27 % de Na⁺ et environ 13 % de K⁺.

La température d'adsorption et d'environ 20 °C et la pression d'adsorption d'environ 6.10⁵ Pa.

Après purification, l'air est récupéré et analysé.

On constate que l'air ainsi purifié est substantiellement exempt d'impuretés N₂O, C₂H₄ et CO₂.

Une zéolite 13X échangée à 60% par des cations Ca²⁺ permet l'arrêt simultané de CO₂, N₂O et éthylène dans l'air avec un volume d'adsorbant beaucoup plus faible que si on emploie de la zéolite 13X.

### Exemple 9: Epuration d'air sur CaLSX (Si/Al = 1).

Cet exemple 9 est analogue à l'exemple 8, c'est-à-dire que de l'air atmosphérique contenant 0,4 ppm de N₂O, 1 ppm de C₂H₄ et 400 ppm de CO₂ est mis en contact avec des particules de zéolite LSX (Si/Al environ égal à 1), c'est-à-dire une zéolite pauvre en silice, échangée à environ 85 % par des ions Ca²⁺ et contenant, en outre, des cations Na⁺ et K⁺ (Na + K ≤15%).

La température d'adsorption et d'environ 20 °C, la pression d'adsorption d'environ 6.10⁵ Pa et, après purification, l'air est récupéré et analysé.

On constate que l'air ainsi purifié est, là encore, substantiellement exempt d'impuretés N₂O, C₂H₄ et CO₂, ce qui confirme qu'une zéolite LSX échangée à 85% par des cations Ca²⁺ permet un arrêt efficace et simultané de CO₂, N₂O et C₂H₄ dans de l'air.

## Revendications

1. Procédé de séparation d'au moins le protoxyde d'azote (N₂O) contenu dans un flux gazeux, dans lequel on adsorbe au moins une partie dudit protoxyde d'azote sur au moins un adsorbant comprenant au moins une zéolite faujasite ayant un rapport Si/AI de 1 à 1,50 environ et contenant moins de 25% de cations K⁺, entre 50 et 99% de cations Ca²⁺ et au moins 1 % de cations Na⁺.

2. Procédé selon la revendication 1, **caractérisé en ce que** ledit au moins un adsorbant comprenant au moins une zéolite est de type X ou LSX ayant un rapport Si/Al de 1 à 1,25 environ, de préférence au moins une zéolite LSX ayant un rapport Si/AI de l'ordre de 1.

3. Procédé selon l'une des revendications 1 ou 2, **caractérisé en ce que** ledit au moins un adsorbant comprenant un mélange d'au moins une zéolite A et d'au moins une zéolite est de type X ou LSX.

4. Procédé selon l'une des revendications 1 à 3, **caractérisé en ce que** la zéolite X ou LSX contient moins de 12% de cations K⁺ et/ou ladite zéolite X ou LSX contient de 60 à 95% de cations Ca²⁺.

5. Procédé selon l'une des revendications 1 à 4, **caractérisé en ce qu'**il comprend, en outre, au moins une étape d'élimination d'au moins une impureté choisie dans le groupe formé par la vapeur d'eau, le dioxyde de carbone, le monoxyde de carbone, l'hydrogène et les hydrocarbures, notamment l'éthylène, le propane et/ou le méthane.

6. Procédé selon la revendications 5, **caractérisé en ce que** l'élimination d'au moins une partie des impuretés vapeur d'eau et dioxyde de carbone est réalisée sur au moins un lit de particules d'alumine activée.

7. Procédé selon l'une des revendications 1 à 6, **caractérisé en ce qu'**il est choisi dans le groupe formé par les procédés TSA, de préférence un procédé TSA dans lequel on opère à une température de -40°C à +80°C.

8. Procédé selon l'une des revendications 1 à 7, **caractérisé en ce qu'**on opère à une pression d'adsorption de 10⁵ à 10⁷ Pa et/ou à une pression de désorption de 5.10⁵ à 10⁴ Pa, préférentiellement à une pression de désorption égale à environ la pression atmosphérique.

9. Procédé selon l'une des revendications 1 à 8, **caractérisé en ce qu'**il comprend au moins une étape de régénération d'au moins un adsorbant, de préférence à une température de régénération de 50 à 250°C.

10. Procédé selon l'une des revendications 1 à 9, **caractérisé en ce que** le flux gazeux à purifier est de l'air, de préférence de l'air soumis subséquemment à une séparation par distillation cryogénique.

## Patentansprüche

1. Verfahren zur Abtrennung von mindestens dem in einem Gasstrom enthaltenem Distickstoffmonoxid (N₂O), bei dem man zumindest einen Teil des Distickstoffmonoxids an mindestens einem Adsorptionsmittel, das mindestens einen Faujasit-Zeolith enthält, welcher ein Si/Al-Verhältnis von ungefähr 1 bis 1,50 aufweist und weniger als 25% K⁺-Kationen, zwischen 50 und 99% Ca²⁺-Kationen und mindestens 1% Na⁺-Kationen enthält, adsorbiert.

2. Verfahren nach Anspruch 1, **dadurch gekennzeichnet, daß** das mindestens eine Adsorptionsmittel mindestens einen Zeolith vom Typ X oder LSX mit einem Si/Al-Verhältnis von ungefähr 1 bis 1,25, vorzugsweise mindestens einen Zeolith LSX mit einem Si/Al-Verhältnis von etwa 1, enthält.

3. Verfahren nach Anspruch 1 oder 2, **dadurch gekennzeichnet, daß** das mindestens eine Adsorptionsmittel ein Gemisch aus mindestens einem Zeolith A und mindestens einem Zeolith vom Typ X oder LSX enthält.

4. Verfahren nach einem der Ansprüche 1 bis 3, **dadurch gekennzeichnet, daß** der Zeolith X oder LSX weniger als 12% K⁺-Kationen und/oder 60 bis 95% Ca²⁺-Kationen enthält.

5. Verfahren nach einem der Ansprüche 1 bis 4, **dadurch gekennzeichnet, daß** man außerdem mindestens einen Schritt der Entfernung mindestens einer Verunreinigung aus der Gruppe bestehend aus Wasserdampf, Kohlendioxid, Kohlenmonoxid, Wasserstoff und Kohlenwasserstoffen, insbesondere Ethylen, Propan und/oder Methan, durchführt.

6. Verfahren nach Anspruch 5, **dadurch gekennzeichnet, daß** man die Entfernung zumindest eines Teils der Verunreinigungen Wasserdampf und Kohlendioxid an mindestens einer Schüttung von Teilchen aus aktiviertem Aluminiumoxid durchführt.

7. Verfahren nach einem der Ansprüche 1 bis 6, **dadurch gekennzeichnet, daß** es aus der Gruppe bestehend aus TSA-Verfahren, vorzugsweise einem TSA-Verfahren, bei dem man bei einer Temperatur von -40°C bis +80°C arbeitet, ausgewählt wird.

8. Verfahren nach einem der Ansprüche 1 bis 7, **dadurch gekennzeichnet, daß** man bei einem Adsorptionsdruck von 10⁵ bis 10⁷ Pa und/oder einem Desorptionsdruck von 5.10⁵ bis 10⁴ Pa, vorzugsweise bei einem ungefähr dem Normaldruck entsprechenden Desorptionsdruck, arbeitet.

9. Verfahren nach einem der Ansprüche 1 bis 8, **dadurch gekennzeichnet, daß** es mindestens einen Schritt der Regeneration mindestens eines Adsorptionsmittels, vorzugsweise bei einer Regenerationstemperatur von 50 bis 250°C, aufweist.

10. Verfahren nach einem der Ansprüche 1 bis 9, **dadurch gekennzeichnet, daß** es sich bei dem zu reinigenden Gasstrom um Luft, vorzugsweise um Luft, die anschließend einer Zerlegung durch Tieftemperaturdestillation unterworfen wird, handelt.

## Claims

1. Process for separating at least nitrogen protoxide (N₂O) contained in a gas stream, in which process at least some of the said nitrogen protoxide is adsorbed on at least one adsorbent comprising at least one faujasite zeolite having an Si/Al ratio of 1 to 1.50 approximately and containing less than 25% of K⁺ cations, between 50 and 99% of Ca²⁺ cations and at least 1% of Na⁺ cations.

2. Process according to Claim 1, **characterized in that** the said at least one adsorbent comprising at least one zeolite is of X or LSX type having an Si/Al ratio of 1 to 1.25 approximately, preferably at least one LSX zeolite having an Si/Al ratio of the order of 1.

3. Process according to either of Claims 1 and 2, **characterized in that** the said at least one adsorbent comprising a mixture of at least one A zeolite and of at least one zeolite is of X or LSX type.

4. Process according to one of Claims 1 to 3, **characterized in that** the X or LSX zeolite contains less than 12% of K⁺ cations and/or the said X or LSX zeolite contains from 60 to 95% of Ca²⁺ cations.

5. Process according to one of Claims 1 to 4, **characterized in that** it furthermore comprises at least one step of removing at least one impurity chosen from the group formed by water vapour, carbon dioxide, carbon monoxide, hydrogen and hydrocarbons, especially ethylene, propane and/or methane.

6. Process according to Claim 5, **characterized in that** the removal of at least some of the water vapour and carbon dioxide impurities is carried out over at least one bed of activated alumina particles.

7. Process according to one of Claims 1 to 6, **characterized in that** it is chosen from the group formed by TSA processes, preferably a TSA process which is carried out at a temperature of -40°C to +80°C.

8. Process according to one of Claims 1 to 7, **characterized in that** it is carried out at an adsorption pressure of 10⁵ to 10⁷ Pa and/or at a desorption pressure of 5 × 10⁵ to 10⁴ Pa, preferably at a desorption pressure approximately equal to atmospheric pressure.

9. Process according to one of Claims 1 to 8, **characterized in that** it comprises at least one step of regenerating at least one adsorbent, preferably at a regeneration temperature of 50 to 250°C.

10. Process according to one of Claims 1 to 9, **characterized in that** the gas stream to be purified is air, preferably air subsequently separated by cryogenic distillation.
